# EUROPEAN PATENT APPLICATION

(11) **EP 2 442 302 A1**
(43) Date of publication of application: **18.04.2012**
(21) Application number: 10785707.0
(22) Date of filing: 21.05.2010
(51) Int. Cl.: G10L 17/00, H04L 9/32, G06F 21/00

(54) **SPEAKER IDENTIFICATION METHOD, APPARATUS AND SYSTEM**

(30) Priority: 12.06.2009 CN 200910086980
(71) Applicant: Huawei Technologies Co., Ltd., Shenzhen, Guangdong 518129 (CN)
(72) Inventor: YANG, Weiwei, Shenzhen Guangdong 518129 (CN); ZHU, Ning, Shenzhen Guangdong 518129 (CN)
(74) Representative: Epping - Hermann - Fischer
(86) International application number: PCT/CN2010/073057
(87) International publication number: WO 2010/142194

(57) **Abstract**

A method, device, and system for speaker recognition are provided. The method includes: receiving a Speaker Verification instruction sent from a Media Gateway Controller (MGC) (101); executing a speaker verification operation according to the Speaker Verification instruction, and obtaining a result of the speaker verification operation (102); and reporting the result of the speaker verification operation to the MGC (103).

## Description

This application claims priority to Chinese Patent Application No. 200910086980.0, filed with the Chinese Patent Office on June 12, 2009 and entitled "METHOD, DEVICE, AND SYSTEM FOR SPEAKER RECOGNITION", which is incorporated herein by reference in its entirety.

### FIELD OF THE INVENTION

The present invention relates to the field of communications technologies, and in particular, to a method, device, and system for speaker recognition.

### BACKGROUND OF THE INVENTION

A voiceprint is a waveform spectrum displayed by an electroacoustical instrument and carrying voice information. It is a personal characteristic of a human being. Like a fingerprint, a voiceprint pattern is different between any two persons in the world. Voiceprint Recognition (VPR) is to recognize, according to the pronunciation characteristics of a person, by whom a voice is said. The VPR is also called speaker recognition. The VPR includes speaker identification and speaker verification. The speaker identification judges by whom a voice is said among several persons, while the speaker verification checks whether a voice is said by a specified person. In a sense, the speaker identification may be considered to be a number of speaker verifications. Different from the speech recognition, the VPR does not consider the meanings of words in a speech but identifies a speaker by using the characteristic information of the speaker in speech signals. Each speaker has unique biological characteristics that are difficult to fake and counterfeit. The speaker recognition technology has such advantages as being secure, accurate, and reliable in terms of identity authentication. Therefore, the speaker recognition has good applicability and may be applied in various fields. For example, the speaker identification may be applied in criminal investigation, criminal tracking, national defense and lawful interception, and personalized applications. The speaker verification may be applied in securities transactions, banking transactions, evidence collection in police departments, voice-controlled lock for Personal Computers (PCs), voice-controlled lock for vehicles, and authentication of ID cards and credit cards.

During the implementation of the present invention, the inventor discovers that the prior art has at least the following problems.

The speaker recognition technology in the prior art is applied in conventional network architectures in a client-server mode, in which a media resource server providing speaker recognition functions is a single network device. However, this mode cannot be applied in an architecture where the bearer is separate from the control in communication networks.

### SUMMARY OF THE INVENTION

Embodiments of the present invention provide a method, device, and system for speaker recognition, to solve the problem in the prior art that the speaker recognition cannot be applied in an architecture where the bearer is separate from the control in communication networks and implement speaker recognition over a Media Gateway Control Protocol (MGCP) in a separate architecture.

An embodiment of the present invention provides a method for speaker recognition, including:
receiving a Speaker Verification instruction sent from a Media Gateway Controller (MGC);
executing a speaker verification operation according to the speaker verification instruction, and obtaining a result of the speaker verification operation; and
reporting the result of the speaker verification operation to the MGC.

An embodiment of the present invention provides another method for speaker recognition, including:
sending a Speaker Verification instruction to a Media Gateway (MG); and
receiving a result of a speaker verification operation that is obtained according to the Speaker Verification instruction and reported by the MG

An embodiment of the present invention provides an MG, including:
a first receiving module, configured to receive a Speaker Verification instruction sent from an MGC;
a verifying module, configured to execute a speaker verification operation according to the Speaker Verification instruction, and obtain a result of the speaker verification operation; and
a reporting module, configured to report the result of the speaker verification operation to the MGC.

An embodiment of the present invention provides an MGC, including:
a first sending module, configured to send a Speaker Verification instruction to an MG; and
a second receiving module, configured to receive a result of a speaker verification operation that is obtained according to the Speaker Verification instruction and reported by the MG

An embodiment of the present invention provides a system for speaker recognition, including:
an MG, configured to: receive a Speaker Verification instruction sent from an MGC; execute a speaker verification operation according to the Speaker Verification instruction, and obtain a result of the speaker verification operation; and report the result of the speaker verification operation to the MGC; and
the MGC, configured to: send the Speaker Verification instruction to the MG; and receive the result of the speaker verification operation that is obtained according to the Speaker Verification instruction and reported by the MG

By using the method, device, and system for speaker recognition in the embodiments of the present invention, the MG performs a speaker verification operation according to a Speaker Verification instruction sent from the MGC, and then reports a result of the speaker verification operation to the MGC. In this way, the speaker recognition is implemented over an MGCP in a separate architecture.

### BRIEF DESCRIPTION OF THE DRAWINGS

FIG 1 is a schematic networking diagram of an MG and an MGC in a Next Generation Network (NGN) according to an embodiment of the present invention;

FIG 2 is a flowchart of a first embodiment of a method for speaker recognition according to the present invention;

FIG 3 is a flowchart of a second embodiment of a method for speaker recognition according to the present invention;

FIG 4 is a signaling flowchart of a third embodiment of a method for speaker recognition according to the present invention;

FIG 5 is a signaling flowchart of a fourth embodiment of a method for speaker recognition according to the present invention;

FIG 6 is a signaling flowchart of a fifth embodiment of a method for speaker recognition according to the present invention;

FIG 7 is a schematic structure diagram of an embodiment of an MG according to the present invention;

FIG 8 is a schematic structure diagram of an embodiment of an MGC according to the present invention; and

FIG 9 is a schematic structure diagram of an embodiment of a system for speaker recognition according to the present invention.

### DETAILED DESCRIPTION OF THE EMBODIMENTS

The present invention is hereinafter described in detail with reference to the embodiments and accompanying drawings.

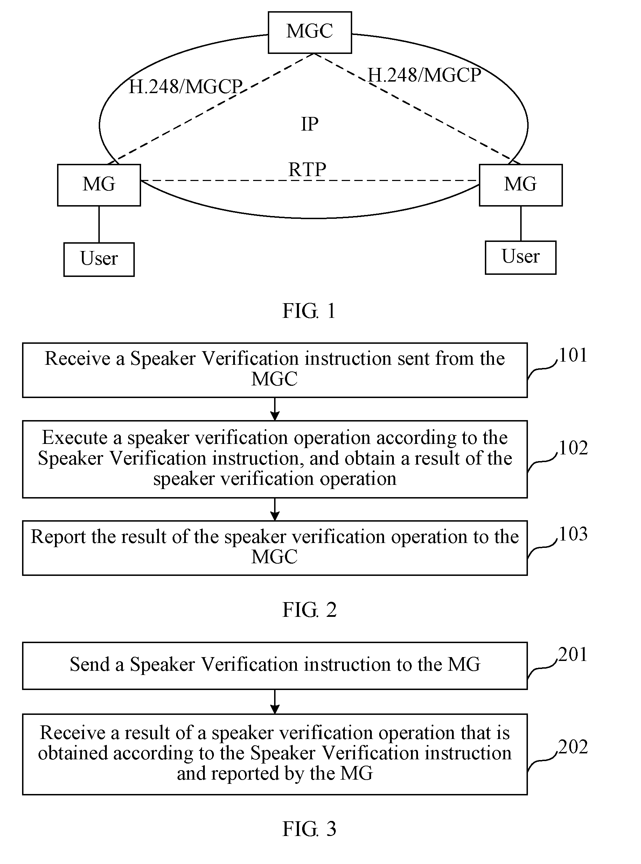

The MGC and the MG are two key network elements in a packet network. The MGC is responsible for the call control function, and the MG is responsible for the service bearer function, so that the call control plane is separate from the service bearer plane. Therefore, the network resources can be fully shared, the equipment upgrade and service extension are simplified, and the development and maintenance costs are reduced. FIG 1 is a schematic networking diagram of an MG and an MGC in an NGN according to an embodiment of the present invention. As shown in FIG 1, the Media Gateway Control Protocol (MGCP), for example, H.248/MeGaCo and MGCP, is the major protocol for communication between the MG and the MGC. The first version of the MGCP was formulated by the Internet Engineering Task Force (IETF) in October 1999 and revised in January 2003. The first version of the H.248/MeGaCo protocol was formulated jointly by the IETF and the International Telegraph Union (ITU) in November 2000 and revised in June 2003. The second version of the H.248 protocol was formulated by the ITU in May 2002 and revised in March 2004. The third version of the H.248 protocol was formulated by the ITU in September 2005. For example, in the H.248 protocol, various resources on the MG are abstractly represented by terminations. The terminations are divided into physical terminations and ephemeral terminations. The physical terminations represent some physical entities that exist semi-permanently, for example, a Time Division Multiplex (TDM) channel. The ephemeral terminations represent some public resources that are requested temporarily and released after being used, for example, a Real-time Transport Protocol (RTP) stream. In addition, a root termination represents the whole MG, and a combination of terminations is abstractly represented by a context. The context may include multiple terminations. Therefore, a topology is used to describe the relationship between the terminations. A termination that is not associated with other terminations is represented by a special context named "null context". In an abstract model based on an MGCP, call connections are actually operations on terminations and contexts. Specifically, such operations are performed through instructions between the MGC and the MG, such as commands, requests, and replies. Command types include: Add, Modify, Subtract, Move, AuditValue, AuditCapabilities, Notify, and ServiceChange. Command parameters, also known as descriptors, are categorized into property, signal, event, and statistic parameters. Parameters of service dependence are aggregated into a package logically.

H.248, being an MGCP, supports the collaboration between the MGC and the MG in implementing various functions of media resource control. For example, H.248.9 defines a series of extension mechanisms to support the MG in executing such functions as Automatic Speech Recognition (ASR), Text To Speech (TTS), Play, and Record. However, the current H.248 protocol does not have a corresponding mechanism to support the speaker recognition function, that is, to support speaker identification or verification according to the audio information of received speeches.

The main idea of the embodiments of the present invention is to define a set of mechanisms for signals, events, and corresponding parameters in an MGCP, for example, H.248, to support the speaker recognition function of the MGC and the MG, for example, the speaker verification operation. In addition, the speaker identification operation may be considered to be a result of multiple speaker verification operations. Both the speaker verification and the speaker identification belong to the speaker recognition.

FIG 2 is a flowchart of a first embodiment of a method for speaker recognition according to the present invention. As shown in FIG 2, the method for speaker recognition includes the following steps.

Step 101: Receive a Speaker Verification instruction sent from the MGC.

To perform speaker recognition over an MGCP, for example, H.248, the MG may receive a Speaker Verification instruction sent from the MGC, where the Speaker Verification instruction may be implemented by using an extended H.248 signal and carry some parameters used to instruct the MG to perform a speaker verification operation on the speech information.

Step 102: Execute a speaker verification operation according to the Speaker Verification instruction, and obtain a result of the speaker verification operation.

If a storage address can be specified for a segment of speech information by using a parameter in the Speaker Verification instruction sent from the MGC, the MG may obtain speech information that needs to be recognized from this storage address. If a parameter is used in the Speaker Verification instruction to instruct the MG to receive real-time speech information of the speaker, the MG may receive the speech information of the speaker in real time. The MG may match the voiceprint of the speech information that needs to be recognized with the voiceprint file stored in the MG, and execute the speaker verification operation. For example, to check whether the speech information that needs to be recognized is the speech information of Zhang San, the MG invokes the stored voiceprint file of Zhang San to match the voiceprint of the speech information.

Step 103: Report the result of the speaker verification operation to the MGC.

The MG may report the result of the speaker verification operation to the MGC through a Notify request message, where the result of the speaker verification operation may include information about whether the matching succeeds, the degree of similarity in the matching, and speaker related information. The reporting process may be implemented through an event. In H.248, to detect and report an event, settings are required on the MG The setting mode includes indication or provision. The event may be set on the root termination, a specific termination, or a specific stream of the MG to represent different applicable scopes of the event detection.

Before step 101, the method for speaker recognition may include a process of establishing a speaker recognition session. The process is as follows. The MG receives from the MGC an instruction for establishing a speaker verification session, where the instruction for establishing the speaker verification session carries a Voiceprint Identifier (VOID) used in the speaker verification operation; and according to the instruction for establishing the speaker verification session, the MG establishes a speaker recognition session, and obtains a voiceprint file corresponding to the VOID.

After step 103, the method for speaker recognition may further include a process of terminating a speaker recognition session. The process is as follows. The MG receives from the MGC an instruction for terminating the speaker verification session; and according to the instruction for terminating the speaker verification session, the MG terminates the speaker verification session, and returns a termination reply message to the MGC.

In addition, in the method for speaker recognition, besides the speaker verification operation performed according to the Speaker Verification instruction sent from the MGC, the MG may perform operations such as obtaining an intermediate result of the speaker verification operation, stopping the speaker verification operation, querying and deleting the voiceprint file, Verification Rollback (VERO), and Clear Buffer (CLBU) of the MG Any one of the following examples may be covered.

Example 1: The method for performing a speaker verification operation on the speech information stored in the buffer of the MG is as follows. The MG receives a Verify from Buffer (VEBU) instruction sent from the MGC, and according to the VEBU instruction, performs a speaker verification operation on the speech information stored in the buffer of the MG

Example 2: The method for obtaining the intermediate result of the speaker verification operation is as follows. The MG receives a Get Intermediate Result (GIR) instruction sent from the MGC, and according to the GIR instruction, obtains the intermediate result of the speaker verification operation that is executed currently, and reports the intermediate result.

Example 3: The method for stopping the speaker verification operation is as follows. The MG receives a Stop Verify (STVE) instruction sent from the MGC, and according to the STVE instruction, stops the speaker verification operation that is executed currently.

Example 4: The method for querying a voiceprint is as follows. The MG receives from the MGC a Query Voiceprint instruction carrying a VOID that needs to be queried, and returns a query result obtained according to the VOID to the MGC.

Example 5: The method for deleting a voiceprint is as follows. The MG receives from the MGC a Delete Voiceprint instruction carrying a VOID that needs to be deleted, and returns a deletion result to the MGC.

Example 6: The method for verifying rollback is as follows. The MG receives a Verify Rollback instruction sent from the MGC, and according to the Verify Rollback instruction, discards latest speech information collected by the MG

Example 7: The method for clearing the buffer is as follows. The MG receives a CLBU instruction sent from the MGC, and discards buffered media data according to the CLBU instruction.

Because the relationship between the MGC and the MG is an instructing-instructed relationship, the Speaker Verification instruction, GIR instruction, STVE instruction, Query Voiceprint instruction, Delete Voiceprint instruction, Verify Rollback instruction, CLBU instruction, instruction for establishing a speaker recognition session, and instruction for terminating a speaker recognition session that the MGC sends to the MG may adopt the format of the H.248 signal, and may be easily implemented by modifying the parameters carried in the H.248 signal only. The MG executes corresponding operations according to various instructions sent from the MGC, and returns a reply message to the MGC.

In this embodiment, the MG executes a speaker verification operation according to the Speaker Verification instruction sent from the MGC and the voiceprint file stored in the MG, and then reports the execution result of the speaker verification operation to the MGC. In this way, the speaker recognition is implemented over an MGCP in a separate architecture, which facilitates the sharing, maintenance, and update of various voiceprint file resources.

FIG 3 is a flowchart of a second embodiment of the method for speaker recognition according to the present invention. As shown in FIG 3, the method for speaker recognition includes the following steps.

Step 201: Send a Speaker Verification instruction to the MG

To perform speaker recognition over an MGCP, for example, H.248, the MGC sends a Speaker Verification instruction to the MG The Speaker Verification instruction is implemented through an extended H.248 signal, and may carry some parameters used to instruct the MG to perform a speaker verification operation on speech information.

Step 202: Receive a result of the speaker verification operation that is obtained according to the Speaker Verification instruction and reported by the MG

If a storage address can be specified for a segment of speech information by using a parameter in the Speaker Verification instruction sent from the MGC, the MG may obtain speech information that needs to be recognized from this storage address. If a parameter is used in the Speaker Verification instruction to instruct the MG to receive real-time speech information of the speaker, the MG may receive the speech information of the speaker in real time. Then, the MG may match the voiceprint of the speech information that needs to be recognized with the voiceprint file stored in the MG The MGC receives a Notify request message reported by the MG, where the Notify request message includes a result of the speaker verification operation performed according to the speech information that needs to be recognized and the stored voiceprint file, for example, information about whether the matching succeeds, the degree of similarity in the matching, and speaker related information. The reporting process may be implemented through an event.

Before step 201, the method for speaker recognition may include a process of establishing a speaker recognition session. Specifically, the process is as follows.

The MGC sends an instruction for establishing a speaker verification session to the MG, where the instruction for establishing the speaker verification session carries a VOID used for the speaker verification operation. According to the instruction for establishing the speaker verification session, the MG establishes a speaker recognition session.

After step 202, the method for speaker recognition may further include a process of terminating a speaker recognition session. Specifically, the process is as follows.

The MGC sends an instruction for terminating the speaker verification session to the MG, and receives a termination reply message returned from the MG According to the instruction for terminating the speaker verification session, the MG terminates the speaker recognition session.

In addition to speaker recognition, the method for speaker recognition may implement operations such as obtaining an intermediate result of the speaker verification operation, stopping the speaker verification operation, querying and deleting the voiceprint file, VERO, and CLBU of the MG Any one of the following examples may be covered.

Example 1: The method for performing a speaker verification operation on the speech information stored in the buffer of the MG is as follows. The MGC sends a VEBU instruction to the MG, instructing the MG to perform, according to the VEBU instruction, a speaker verification operation on the speech information stored in the buffer of the MG

Example 2: The method for obtaining the intermediate result of the speaker verification operation is as follows. The MGC sends a GIR instruction to the MG, instructing the MG to obtain, according to the GIR instruction, the intermediate result of the speaker verification operation that is executed currently and report the intermediate result.

Example 3: The method for stopping the speaker verification operation is as follows. The MGC sends an STVE instruction to the MG, instructing the MG to stop, according to the STVE instruction, the speaker verification operation that is executed currently.

Example 4: The method for querying a voiceprint is as follows. The MGC sends a Query Voiceprint instruction carrying a VOID that needs to be queried to the MG, and receives a query result that is obtained according to the VOID and returned by the MG

Example 5: The method for deleting a voiceprint is as follows. The MGC sends a Delete Voiceprint instruction carrying a VOID that needs to be deleted to the MG, and receives a deletion result that is obtained according to the VOID and returned by the MG

Example 6: The method for verifying rollback is as follows. The MGC sends a Verify Rollback instruction to the MG, instructing the MG to discard, according to the Verify Rollback instruction, latest speech information collected by the MG

Example 7: The method for clearing the buffer is as follows. The MGC sends a CLBU instruction to the MG, instructing the MG to discard buffered media data according to the CLBU instruction.

Because the relationship between the MGC and the MG is an instructing-instructed relationship, the Speaker Verification instruction, GIR instruction, STVE instruction, Query Voiceprint instruction, Delete Voiceprint instruction, Verify Rollback instruction, CLBU instruction, instruction for establishing a speaker recognition session, and instruction for terminating a speaker recognition session that the MGC sends to the MG may adopt the format of the H.248 signal, and may be easily implemented by modifying the parameters carried in the H.248 signal only. The MG executes corresponding operations according to various instructions sent from the MGC, and returns a reply message to the MGC.

In this embodiment, the MGC sends a Speaker Verification instruction carrying the status of the speech information that needs to be recognized to the MG, instructing the MG to execute the speaker verification operation according to the voiceprint file stored in the MG; and receives an execution result of the speaker verification operation reported by the MG In this way, the speaker recognition is implemented over an MGCP in a separate architecture, which facilitates the sharing, maintenance, and update of various voiceprint file resources.

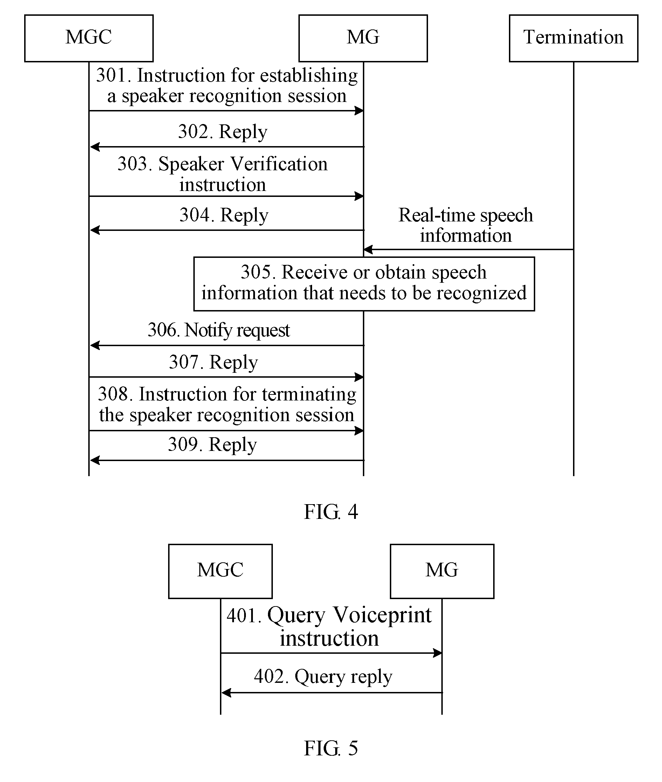

FIG 4 is a signaling flowchart of a third embodiment of a method for speaker recognition according to the present invention. As shown in FIG 4, this method, based on the first embodiment of the method for speaker recognition according to the present invention, includes the following steps.

Step 301: The MGC sends an instruction for establishing a speaker recognition session to the MG, where the instruction for establishing the speaker recognition session may be implemented by using an extended H.248 signal, so as to instruct the MG to create a speaker recognition session, for example, a speaker verification session. The instruction for establishing the speaker recognition session may be carried in an instruction message of H.248, for example, ADD, MODIFY, or MOVE.

An H.248 signal may be extended to instruct the MG to create a speaker verification session. For example, the H.248 signal is named "Start Verification Session (SVS)" signal. The type of the SVS signal may be set to Brief (BR), that is, the SVS signal may be stopped automatically or replaced with a new signal descriptor. In addition, signals of the BR type have no limit of expiration time. The SVS signal may be defined in an existing package or a new package. For example, a new package is defined and named "Speaker Verification and Identification" package.

Some parameters may be defined in the SVS signal. When the MGC sends the SVS signal to the MG, these parameters defined in the SVS signal may also be sent to the MG at the same time. By using these parameters, the MGC instructs the MG to establish a speaker recognition session. The following describes methods for defining various parameters that may be carried in the SVS signal.

Parameter 1: Repository Uniform Resource Identifier (REURI)

The REURI parameter is used to indicate the ID of a repository where the voiceprint file used or referred to in the establishment of a speaker verification session is located. The REURI parameter is a string parameter, and the value of this parameter may adopt the URI format or other formats used to identify the resource information.

Parameter 2: VOID

The VOID parameter is used to indicate the ID of a voiceprint file for performing the speaker verification operation. The voiceprint file is used to match the voiceprint of the speech information of the speaker in the speaker recognition session. The voiceprint file specified by the VOID parameter may already exist or be a new voiceprint file. The VOID parameter may be a string parameter.

Parameter 3: Verification Mode (VEMO)

The VEMO parameter is used to indicate the verification operation mode, including "Train" and "Verify". The Train mode means that the verification session will train a voiceprint. The Verify mode means that the existing voiceprint file is used to perform speaker verification and speaker recognition. The VEMO parameter may be a Boolean parameter. When the value of the VEMO parameter is "True", it indicates the Train mode; and when the value of the VEMO parameter is "False", it indicates the Verify mode. The VEMO parameter may also be an enumeration parameter, with the values including "Train" and "Verify".

Parameter 4: Adapt Control (ADCO)

The ADCO parameter is used to specify whether to update the voiceprint file resource after the verification operation succeeds. If the value of the ADCO parameter is "True", it indicates that the MG needs to update the voiceprint file of a corresponding speaker by using the speech information collected in the verification session. If the value of the ADCO parameter is "False", it indicates that the MG is not allowed to modify the voiceprint file. The ADCO parameter may be a Boolean parameter.

Parameter 5: Minimum Verification Score (MINVS)

The MINVS parameter is used to specify the minimum success condition that is acceptable to the speaker verification operation. The acceptable condition may be represented by a numerical value in a range of -100 to 100. The default value of the MINVS parameter may be determined according to the specific implementation. The MINVS parameter may be an integer parameter.

Parameter 6: Minimum Number of Verification Phrases (MINNVP)

The MINNVP parameter is used to specify the minimum number of valid utterances (phrases) needed to perform the speaker verification operation correctly. The MINNVP parameter may be represented by a numerical value and the value may be any integer. The default value of the MINNVP parameter is "1". The MINNVP parameter may be an integer parameter. A successful speaker verification operation requires that the number of valid utterances received and processed by the MG should meet the value of the MINNVP parameter.

Parameter 7: Maximum Number of Verification Phrases (MAXNVP)

The MAXNVP parameter is used to specify the maximum number of valid utterances (phrases) needed to perform the speaker verification operation correctly. When the number of valid utterances received and processed by the MG meets the value of the MAXNVP parameter, the MG needs to feed back an operation result to the MGC, where the operation result cannot be "Undecided". The MAXNVP parameter may be represented by a numerical value and the value may be any integer equal to or greater than 1. The default value of the MAXNVP parameter depends on the specific implementation. The MAXNVP parameter may be an integer parameter.

Step 302: After the MG receives the instruction for establishing the speaker recognition session, for example, the SVS signal, the MG establishes a speaker recognition session according to the parameters carried in the instruction for establishing the speaker recognition session, and returns an establishment reply message to the MGC. In addition, according to the REURI parameter and the VOID parameter, the MG may query and obtain a voiceprint file used for the speaker verification operation.

Step 303: The MGC sends a Speaker Verification instruction to the MG, where the Speaker Verification instruction may be implemented by using an extended H.248 signal, so as to instruct the MG to execute the speaker recognition operation, for example, the speaker verification operation.

The MGC may instruct the MG to perform speaker verification on specified speech information, for example, a speech segment, or the MGC instructs the MG to receive real-time speech information of the speaker and perform a speaker verification operation. In step 303 or step 301, by setting an event, the MGC may require the MG to report a verification result. In this embodiment, the signal instruction and event instruction may be carried in an instruction message of H.248 such as MODIFY or MOVE.

An H.248 signal may be extended to instruct the MG to perform a speaker verification operation. The H.248 signal may be executed to train or adapt the voiceprint file, or verify or identify an asserted identity. For example, the H.248 signal is named "Speaker Verify (SPVE)" signal. The type of the SPVE signal may be set to BR. The SPVE signal may be defined in an existing package or a new package, for example, defined in the preceding "Speaker Verification and Identification" package. Some parameters may be defined in the SPVE signal. When the MGC sends the SPVE signal to the MG, these parameters defined in the SPVE signal may also be sent to the MG at the same time. By using these parameters, the MGC instructs the MG to perform a speaker recognition operation. The following describes methods for defining various parameters that may be carried in the SPVE signal.

Parameter 1: No Input Timeout (NITO)

The NITO parameter is used to specify a duration threshold, that is, a timer, for no input data in the process of a speaker verification operation. The input data may be the speech information of a user. The NITO parameter may be represented by a numerical value. The NITO parameter may be an integer parameter and the value thereof may be in the unit of milliseconds.

Parameter 2: Waveform Save (WASA)

The WASA parameter is used to specify whether the MG saves the speech data used for the verification operation. The WASA parameter may be a Boolean parameter. If the value of the WASA parameter is "True", it indicates that the MG needs to save the speech data; and if the value of the WASA parameter is "False", it indicates that the MG does not need to save the speech data. If the MG saves the speech data, the data may be stored in the URI format and sent to the MGC through a verification result event.

Parameter 3: Media Type (METY)

The METY parameter is used to specify the media type of audio or video data used in the verification operation. The METY parameter may be a string parameter. The METY parameter is an optional parameter, and the media type information may be displayed through the extension name of the media storage file.

Parameter 4: Buffer Utterance Control (BUCO)

The BUCO parameter is used to indicate whether the currently processed utterance information can be used in the subsequent verification operation; and if the currently processed utterance information can be used in the subsequent verification operation, the utterance information needs to be buffered. The BUCO parameter may be a Boolean parameter. If the value of the BUCO parameter is "True", it indicates that the MG needs to buffer speech data related to the utterance information, so that the speech data can be used in the subsequent speaker verification operation; and if the value of the BUCO parameter is "False", it indicates that the MG does not need to buffer the speech data.

Parameter 5: Input Waveform URI (IWURI)

The IWURI parameter is used to inform the MG of the URI information of saved audio contents that need to be pre-obtained and processed for the verification operation. The MG pre-obtains and processes the data in a specified storage address according to the URI carried in the IWURI parameter. If the value of the VEMO parameter is "Train", it indicates that the MG trains the voiceprint file by using a URI file specified by the IWURI parameter; and if the value of the VEMO parameter is "Verify", it indicates that the MG verifies the voiceprint by using a URI file specified by the IWLTRI parameter. The IWURI parameter is a string parameter, and the value of this parameter may adopt the URI format or other formats used to identify the resource information. The IWURI parameter is optional. If the MGC does not specify the IWURI parameter in the signal, it indicates that the MG performs the verification operation on the real-time speech information.

Parameter 6: Speech Complete Timeout (SCTO)

The SCTO parameter is used to specify a silence duration timer needed for the speaker to input voices in the speaker verification operation. The SCTO parameter is represented by a numerical value in the unit of milliseconds. The SCTO parameter may be an integer parameter, with the value ranging from 0.3 s to 1.0 s. The value is subject to the actual application.

Step 304: After the MG receives the Speaker Verification instruction, for example, the SPVE signal, the MG returns a verification reply message to the MGC. Through the verification reply message, the MG informs the MGC of the fact that the MG already receives the SPVE signal and can start the speaker verification operation.

Step 305: The MG receives or obtains the speech information of the speaker that needs to be recognized, for example, it receives real-time speech information that the speaker sends through the termination or queries a speech file corresponding to a specified storage address, and by using various parameters related to the speaker verification obtained in step 301 and step 303, matches the voiceprint information of the speech information that needs to be recognized with the obtained voiceprint file used for the verification operation.

Step 306: The MG reports the execution result of the speaker verification operation to the MGC through a Notify request message. If the speaker verification operation fails, the MG reports a speaker verification operation failure result to the MGC; and if the speaker verification operation succeeds, the MG reports a speaker verification operation success result to the MGC.

In H.248, to detect and report an event, settings are required on the MG The setting method includes indication or provision. To enable the MG to report the result of the speaker verification operation, the event needs to be set on the MG, for example, the event is set in step 301 or step 303. The event may be set on the root termination, a specific termination, or a specific stream of the MG to represent different applicable scopes of the event detection.

An H.248 event may be extended to indicate that the speaker verification operation fails. For example, the H.248 event is named "Speaker Verification Failure (SPFA)" event. The SPFA event may be defined in an existing package or a new package, for example, defined in the preceding "Speaker Verification and Identification" package. When the MGC sends an SPFA event to the MG, the SPFA event may not carry parameters; and when the MG reports an SPFA event to the MGC, the SPFA event may carry parameters to indicate different error return codes indicating different error types.

Another H.248 event may be extended to indicate that the speaker verification operation succeeds, and the operation execution result is carried in a defined parameter. The verification result carried in the H.248 event depends on different time when the event is reported, and may be the intermediate result of the speaker verification operation or the final result after the operation is completed. For example, the H.248 event is named "Speaker Verification Result (SPRE)" event. The SPRE event may be defined in an existing package or a new package, for example, defined in the preceding "Speaker Verification and Identification" package. When the SPRE event is sent from the MGC to the MG, the SPRE event may carry no parameter; and when the SPRE event is reported from the MG to the MGC, the SPRE event may carry parameters to indicate the verification result data. The speaker verification success result may be reported in two modes. The first mode is to report the verification and recognition result as a whole string, for example, report the verification result in such grammar formats as an Extensible MultiModal Annotation markup language (EMMA) or Extensible Markup Language (XML) format. In this mode, only one event parameter needs to be defined. The second mode is to define multiple event parameters and carry the training result information in these event parameters for reporting. The following describes methods for defining various parameters that may be carried in the SPRE event.

Parameter 1: VOID

The VOID parameter is used to specify the ID of a voiceprint file for performing the verification operation. The VOID parameter may be a string parameter.

Parameter 2: Score Type (SCTY)

The SCTY parameter is used to indicate different types of verification matching results, including Incremental and Cumulative. The SCTY parameter may be a Boolean parameter or an enumeration parameter.

Parameter 3: Decision (DE)

The DE parameter is used to indicate the verification matching conclusion, including Accepted, Rejected, and Undecided. The DE parameter may be an enumeration parameter.

Parameter 4: Utterance Length (UTLE)

The UTLE parameter is used to indicate the length of incremental utterance data or cumulative utterance data. The UTLE parameter may be an integer parameter in the unit of milliseconds.

Parameter 5: Device Type (DETY)

The DETY parameter is used to indicate the device type information of the speaker, for example, Cellular Phone, Electret Phone, Carbon Button Phone, and Unknown. The DETY parameter may be an enumeration parameter.

Parameter 6: Gender (GE)

The GE parameter is used to indicate the gender of the speaker, including Male, Female, and Unknown. The GE parameter may be an enumeration parameter.

Parameter 7: Adapt Type (ADTY)

The ADTY parameter is used to indicate whether the voiceprint file is adapted and updated according to the utterance data. The ADTY parameter may be a Boolean parameter.

Parameter 8: Verification Score (VS)

The VS parameter is used to specify the matching score value for the speaker verification operation. The VS parameter may be an integer parameter, with the value ranging from -100 to 100.

Parameter 9: Vendor Specific Result (VSRE)

The VSRE parameter is used to carry other data information related to implementation. The VSRE parameter may be a string parameter.

In addition, when a successful recognition result is reported, the SPRE event may further carry the following parameter.

Parameter 10: WASA

The WASA parameter is used to carry the URI information of the saved waveform file. The WASA parameter is a string parameter.

If multiple speaker verification results need to be carried in the SPRE event, the type of the preceding parameters may be set to a list. For example, the first parameter VOID may be set to Sub-list of String that may carry one or multiple VOIDS. In this way, the SPRE event may include multiple VOIDS, and other parameters carry a recognition result corresponding to each VOID at the same time. Therefore, the VOID parameter is a key parameter in the SPRE event. The value of other parameters should include the same number of entries as the number of VOID parameters. If a specific entry in a parameter is not applicable to a corresponding VOID, the entry needs to be assigned NULL.

Step 307: After the MGC receives related data of the result of the speaker verification operation reported by the MG, the MGC returns a result reply message to the MG The result reply message is used to indicate that the MG receives the result of the speaker verification operation sent from the MGC.

Step 308: The MGC sends an instruction for terminating the speaker recognition session to the MG, where the instruction for terminating the speaker recognition session may be implemented through an extended H.248 signal, so as to instruct the MG to terminate the speaker recognition session.

An H.248 signal may be extended to instruct the MG to terminate a speaker verification session. For example, the H.248 signal is named "End Verification Session (EVS)" signal. The type of the EVS signal may be set to BR. The EVS signal may be defined in an existing package or a new package, for example, defined in the preceding "Speaker Verification and Identification" package. Some parameters may be defined in the EVS signal. When the MGC sends the EVS signal to the MG, these parameters defined in the EVS signal may also be sent to the MG at the same time. By using these parameters, the MGC instructs the MG to terminate the speaker verification session. The following is an example of the parameter that may be carried in the EVS signal.

An Abort Control (ABCO) parameter is used to specify an operation behavior on the voiceprint information when the verification session is terminated. The ABCO parameter is a Boolean parameter. If the value of the ABCO parameter is "True", it indicates that the MG needs to discard the speech information that is collected in the verification session or is being processed; and if the value of the ABCO parameter is "False", it indicates that the MG saves the current speech information collected in the verification session and modifies the voiceprint file.

Step 309: After the MG receives the instruction for terminating the speaker recognition session, for example, the EVS signal, the MG terminates the speaker recognition session according to the parameters carried in the instruction for terminating the speaker recognition session, and returns a termination reply message to the MGC.

In this embodiment, on the basis of the basic process of the method for speaker recognition, each signal and event may be further extended and defined to support the MGC and the MG in implementing speaker verification and identification functions.

In this embodiment, by using various parameters defined and extended in the H.248 signal, the MGC sends a Speaker Verification instruction represented by the H.248 signal to the MG; according to the parameters in the Speaker Verification instruction, the MG obtains speech information that needs to be recognized, and matches the voiceprint of the speech information with the stored voiceprint file; and the MG reports the matching result by using a defined H.248 event. In this way, the speaker recognition may be implemented over an MGCP in a separate architecture, which facilitates the sharing, maintenance, and update of various voiceprint file resources.

FIG 5 is a signaling flowchart of a fourth embodiment of a method for speaker recognition according to the present invention. As shown in FIG 5, this method, based on the first embodiment and the second embodiment of the method for speaker recognition according to the present invention, includes the following steps.

Step 401: The MGC sends a Query Voiceprint instruction to the MG, where the Query Voiceprint instruction may be implemented through an extended H.248 signal. The Query Voiceprint instruction may be carried in an instruction message of H.248, such as ADD, MODIFY, or MOVE.

An H.248 signal may be extended to instruct the MG to perform a VOQU operation. For example, the H.248 signal is named "VOQU" signal. The type of the VOQU signal may be set to BR. The VOQU signal may be defined in an existing package or a new package, for example, defined in the preceding "Speaker Verification and Identification" package.

Some parameters may be defined in the VOQU signal. When the MGC sends the VOQU signal to the MG, these parameters defined in the VOQU signal can instruct the MG to query a voiceprint. The following describes the methods for defining various parameters that may be carried in the VOQU signal.

Parameter 1: REURI

The REURI parameter is used to indicate the ID of a repository where the voiceprint file that needs to be queried is located. The REURI parameter may be a string parameter, and the value of this parameter may adopt the URI format or other formats used to identify the resource information.

Parameter 2: VOID

The VOID parameter is used to specify the ID of a voiceprint file that is queried. The VOID parameter may be a string parameter.

Parameter 3: Voiceprint Exists (VOEX)

The VOEX parameter is used to indicate whether the voiceprint file that needs to be queried exists. The VOEX parameter may be a Boolean parameter. If the value of the VOEX parameter is "True", the voiceprint file that needs to be queried exists; and if the value of the VOEX parameter is "False", the voiceprint file that needs to be queried does not exist. When the MGC sends a Query Voiceprint instruction to the MG, the value of the VOEX parameter may be a wildcard "$". The MG may notify the MGC of the query result by assigning a value to the VOEX parameter in a reply message.

Step 402: After the MG receives the Query Voiceprint instruction, for example, the VOQU signal, the MG returns a query reply message to the MGC, where the query reply message may carry the query result by assigning a value to the VOEX parameter. The MG may query the ID of the repository where the voiceprint file is located according to the REURI parameter, and query the needed voiceprint file according to the VOID parameter. If the needed voiceprint file exists, the value of the VOEX parameter is "True"; and if the needed voiceprint file does not exist, the value of the VOEX parameter is "False".

By using various parameters defined and extended in the H.248 signal in this embodiment, the MGC sends a Query Voiceprint instruction represented by the H.248 signal to the MG; and the MG queries a needed voiceprint file according to the parameters in the Query Voiceprint instruction. In this way, the VOQU is implemented over an MGCP in a separate architecture. The speaker recognition in a separate architecture may facilitate the sharing, maintenance, and update of various voiceprint file resources.

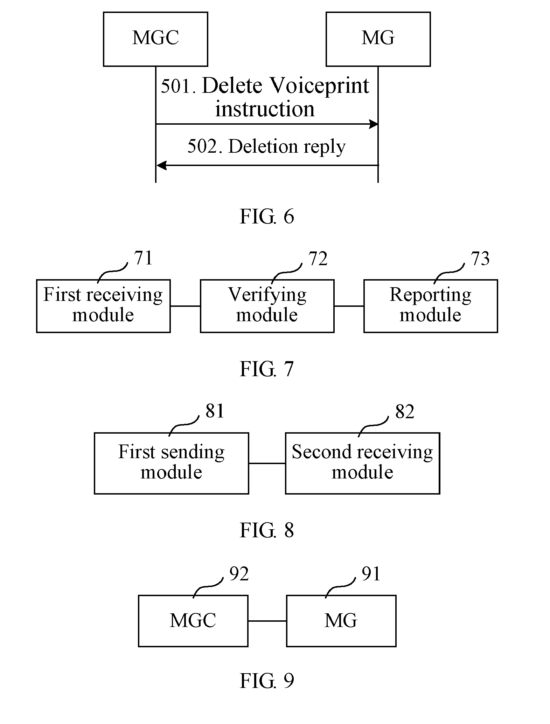

FIG 6 is a signaling flowchart of a fifth embodiment of a method for speaker recognition according to the present invention. As shown in FIG 6, this method, based on the first embodiment and the second embodiment of the method for speaker recognition according to the present invention, includes the following steps.

Step 501: The MGC sends a Delete Voiceprint instruction to the MG, where the Delete Voiceprint instruction may be implemented through an extended H.248 signal. The Delete Voiceprint instruction may be carried in an instruction message of H.248, such as ADD, MODIFY, or MOVE.

An H.248 signal may be extended to instruct the MG to delete a voiceprint. For example, the H.248 signal is named "VODE" signal. The type of the VODE signal may be set to BR. The VODE signal may be defined in an existing package or a new package, for example, defined in the preceding "Speaker Verification and Identification" package.

Some parameters may be defined in the VODE signal. When the MGC sends the VODE signal to the MG, these parameters defined in the VODE signal can instruct the MG to delete the voiceprint. The following describes the methods for defining various parameters that may be carried in the VODE signal.

Parameter 1: REURI

The REURI parameter is used to indicate the ID of a repository where the voiceprint file that needs to be deleted is located. The REURI parameter may be a string parameter, and the value of this parameter may adopt the URI format or other formats used to identify the resource information.

Parameter 2: VOID

The VOID parameter is used to specify the ID of a voiceprint file that is deleted. The VOID parameter may be a string parameter.

Parameter 3: VOEX

The VOEX parameter is used to indicate whether the voiceprint file that needs to be deleted exists before the deletion is performed. The VOEX parameter may be a Boolean parameter. If the value of the VOEX parameter is "True", the voiceprint file that needs to be deleted exists; and if the value of the VOEX parameter is "False", the voiceprint file that needs to be deleted does not exist. When the MGC sends a Delete Voiceprint instruction to the MG, the value of the VOEX parameter may be a wildcard "$". The MG may notify the MGC of the deletion result by assigning a value to the VOEX parameter in a reply message.

Step 502: After the MG receives the Delete Voiceprint instruction, for example, the VODE signal, the MG returns a deletion reply message to the MGC, where the deletion reply message may carry the deletion result by assigning a value to the VOEX parameter. The MG may query the ID of the repository where the voiceprint file is located according to the REURI parameter, and query the needed voiceprint file according to the VOID parameter. If the needed voiceprint file exists before the deletion is performed, the value of the VOEX parameter is "True"; and if the needed voiceprint file does not exist before the deletion is performed, the value of the VOEX parameter is "False".

By using various parameters defined and extended in the H.248 signal in this embodiment, the MGC sends a Delete Voiceprint instruction represented by the H.248 signal to the MG; and the MG deletes a specified voiceprint file according to the parameters in the Delete Voiceprint instruction. In this way, the voiceprint file is deleted over an MGCP in a separate architecture. The speaker recognition in a separate architecture may facilitate the sharing, maintenance, and update of various voiceprint file resources.

The method for speaker recognition according to the present invention may further include a method for verification from the buffer in addition to the method for querying a voiceprint and the method for deleting a voiceprint in the fourth embodiment and the fifth embodiment. Specifically, the VEBU instruction that the MGC sends to the MG may be implemented through an extended H.248 signal, for example, the H.248 signal is named "VEBU" signal. By using the VEBU signal, the MGC may instruct the MG to perform a speaker recognition (for example, speaker verification) operation on the speech information stored in the buffer of the MG The type of the VEBU signal may be set to BR. The VEBU signal may be defined in an existing package or a new package, for example, defined in the preceding "Speaker Verification and Identification" package. The VEBU signal that the MGC sends to the MG does not need to carry any parameters.

In addition, the method for speaker recognition may further include a method for verifying rollback. Specifically, the Verify Rollback instruction that the MGC sends to the MG may be implemented by defining an extended H.248 signal. For example, the H.248 signal is named "VERO" signal. By using the VERO signal, the MGC may instruct the MG to discard the latest speech information (for example, utterance data) collected by the MG The type of the VERO signal may be set to BR. The VERO signal may be defined in an existing package or a new package, for example, defined in the preceding "Speaker Verification and Identification" package. The VERO signal that the MGC sends to the MG does not need to carry any parameters.

Furthermore, the method for speaker recognition may further include a method for clearing the buffer. Specifically, the CLBU instruction that the MGC sends to the MG may be implemented by defining an extended H.248 signal. For example, the H.248 signal is named "CLBU" signal. By using the CLBU signal, the MGC may instruct the MG to clear the current buffer space, that is, to discard the current data in the buffer. The type of the CLBU signal may be set to BR. The CLBU signal may be defined in an existing package or a new package, for example, defined in the preceding "Speaker Verification and Identification" package. The CLBU signal that the MGC sends to the MG does not need to carry any parameters.

Furthermore, the method for speaker recognition may further include a method for obtaining an intermediate result of the speaker verification operation. Specifically, the GIR instruction that the MGC sends to the MG may be implemented by defining an extended H.248 signal. For example, the H.248 signal is named "GIR" signal. By using the GIR signal, the MGC may instruct the MG to return the intermediate result of the current speaker verification operation to the MGC. This intermediate result may be only a piece of data regarding the voiceprint matching process. The type of the GIR signal may be set to BR. The GIR signal may be defined in an existing package or a new package, for example, defined in the preceding "Speaker Verification and Identification" package. The GIR signal that the MGC sends to the MG may carry signal parameters corresponding to the information that the MGC expects to obtain. The parameters may be the same as the parameters set for the preceding verification result event, including VOID, SCTY, DE, UTLE, DETY, GE, and ADTY When a parameter is sent, the assigned value may be "$". The MG carries result information in a reply message returned to the MGC. In addition, the method for implementing the GIR signal may also be as follows. The MGC sends the GIR signal that carries no parameter; and when the MG receives the GIR signal, the MG triggers the SPRE event, that is, it obtains the result of the current speaker verification operation, and reports the result to the MGC through the SPRE event.

Furthermore, the method for speaker recognition may further include a method for stopping the current speaker verification operation. Specifically, the STVE instruction that the MGC sends to the MG may be implemented by defining an extended H.248 signal and used to instruct the MG to stop the current speaker verification operation. For example, the H.248 signal is named "STVE" signal. The type of the STVE signal may be set to BR. The STVE signal may be defined in an existing package or a new package, for example, defined in the preceding "Speaker Verification and Identification" package. The STVE signal is different from the preceding signal for terminating the speaker verification session in that: the STVE signal is used to stop the speaker verification operation that is executed currently, but does not release recognition resources; while the EVS signal is used to release recognition session resources. Some parameters may be defined in the STVE signal. When the MGC sends the STVE signal to the MG, these parameters defined in the STVE signal may also be sent to the MG at the same time. By using these parameters, the MGC instructs the MG to stop the ongoing speaker verification operation. The STVE signal may carry parameters such as an Abort Verification (ABVE) parameter to specify whether to report the current verification operation result when the verification operation is aborted. The ABVE parameter is a Boolean parameter. If the value of the ABVE parameter is "True", it indicates that the MG should discard the execution result of the current speaker verification operation; and if the value of the ABVE parameter is "False", it indicates that the MG needs to report the execution result of the current speaker verification operation to the MGC. After the MG receives an STVE instruction, for example, the STVE signal, the MG stops the current speaker verification operation, and returns a stop reply message to the MGC. If the value of the ABVE parameter is "False", the MG triggers the preceding SPRE event, that is, the MG obtains the result of the current speaker verification operation, and reports the result to the MGC through the SPRE event.

In this embodiment, an extended H.248 signal is used to represent the VEBU instruction, GIR instruction, STVE instruction, Verify Rollback instruction, and CLBU instruction; and the MGC sends the H.248 signal to the MG In this way, operations such as VEBU, GIR, STVE, VERO, and CLBU can be implemented in a separate architecture through the speaker verification process, thus facilitating the sharing, maintenance, and update of various voiceprint file resources.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium capable of storing program codes, such as a Read Only Memory (ROM), a Random Access Memory (RAM), a magnetic disk, or a Compact Disk-Read Only Memory (CD-ROM).

FIG 7 is a schematic structure diagram of an embodiment of an MG according to the present invention. As shown in FIG 7, the MG includes a first receiving module 71, a verifying module 72, and a reporting module 73. The first receiving module 71 is configured to receive a Speaker Verification instruction sent from an MGC, where the Speaker Verification instruction carries the status of speech information that needs to be recognized. The verifying module 72 is configured to execute a speaker verification operation according to the Speaker Verification instruction, and obtain a result of the speaker verification operation. The reporting module 73 is configured to report the result of the speaker verification operation to the MGC.

Specifically, when the MG performs speaker recognition over an MGCP, for example, H.248, after the first receiving module 71 of the MG receives the Speaker Verification instruction sent from the MGC, the verifying module 72 executes the speaker verification operation according to the Speaker Verification instruction, and obtains the result of the speaker verification operation. If the Speaker Verification instruction sent from the MGC carries a storage address of a segment of specified speech information, the verifying module 72 may obtain speech information that needs to be recognized from the storage address. If the Speaker Verification instruction instructs the MG to receive real-time speech information of the speaker, the verifying module 72 may receive real-time speech information of the speaker. Then, the verifying module 72 executes the speaker verification operation, for example, it matches the voiceprint of the speech information with the voiceprint file stored in the MG; and the reporting module 73 reports the result of the speaker verification operation to the MGC. The specific method for speaker recognition performed by the first receiving module, the verifying module, and the reporting module is described in the first embodiment and the second embodiment of the method for speaker recognition.

Further, the MG may include a first session establishing module and an invoking module. The first session establishing module is configured to receive from the MGC an instruction for establishing a speaker verification session, where the instruction for establishing the speaker verification session carries a VOID used for the speaker verification operation. The invoking module is configured to establish a speaker recognition session according to the instruction for establishing the speaker verification session, and obtain a voiceprint file corresponding to the VOID. Before the first receiving module 71 receives the Speaker Verification instruction sent from the MGC, the first session establishing module may receive from the MGC an instruction for establishing a speaker recognition session; the invoking module establishes a speaker recognition session according to the instruction for establishing the speaker recognition session, and queries and invokes a voiceprint file corresponding to the VOID according to the VOID carried in the instruction for establishing the speaker recognition session; and if the instruction for establishing the speaker recognition session carries the ID of a repository, the invoking module may query a voiceprint file corresponding to the VOID in the voiceprint file repository corresponding to the ID of the repository. In this way, the verifying module 72 may match the voiceprint of the speech information that needs to be recognized with the voiceprint file.

The MG may further include a first session terminating module and a terminating and replying module. The first session terminating module is configured to receive from the MGC an instruction for terminating the speaker verification session. The terminating and replying module is configured to terminate the speaker verification session according to the instruction for terminating the speaker verification session, and return a termination reply message to the MGC. The specific method for establishing and terminating the voiceprint session connection by the first session establishing module, invoking module, first session terminating module, and terminating and replying module is described in the first embodiment and the third embodiment of the method for speaker recognition.

In addition, when the MGC needs to instruct the MG to perform a speaker verification operation on the speech information in the buffer, the MG may include a first buffer verifying module. The first buffer verifying module is configured to receive a VEBU instruction sent from the MGC, and perform a speaker verification operation on the speech information stored in the buffer of the MG according to the VEBU instruction.

When the MGC needs to instruct the MG to obtain the intermediate result of the speaker verification operation, the MG may include a first intermediate result module. The first intermediate result module is configured to receive a GIR instruction sent from the MGC, obtain the intermediate result of the speaker verification operation according to the GIR instruction, and report the intermediate result.

When the MGC needs to instruct the MG to stop the speaker verification operation, the MG may include a first verification stopping module configured to receive an STVE instruction sent from the MGC, and according to the STVE instruction, stop the speaker verification operation that is executed currently.

When the MGC needs to instruct the MG to query a voiceprint file, the MG may further include a first query instructing module. The first query instructing module is configured to receive a Query Voiceprint instruction sent from the MGC, where the Query Voiceprint instruction carries a VOID that needs to be queried, and return a query result obtained according to the VOID to the MGC. After the query operation is completed, the MG may return a query reply message to the MGC to inform the MGC of the query result. The specific method for querying a voiceprint by the first query instructing module is described in the first embodiment, the third embodiment, and the fourth embodiment of the method for speaker recognition.

When the MGC needs to instruct the MG to delete a voiceprint file, the MG may further include a first deletion instructing module. The first deletion instructing module is configured to receive a Delete Voiceprint instruction sent from the MGC, where the Delete Voiceprint instruction carries a VOID that needs to be deleted, and return a deletion result to the MGC. After the deletion operation is completed, the MG may return a deletion reply message to the MGC to inform the MGC of the deletion result. The specific method for deleting a voiceprint by the first deletion instructing module is described in the first embodiment, the third embodiment, and the fifth embodiment of the method for speaker recognition.

When the MGC needs to instruct the MG to perform VERO, the MG may further include a first VERO module. The first VERO module is configured to receive a Verify Rollback instruction sent from the MGC, and according to the Verify Rollback instruction, discard latest speech information collected by the MG

When the MGC needs to instruct the MG to clear the buffer, the MG may further include a first buffer clearing module. The first buffer clearing module is configured to receive a CLBU instruction sent from the MGC, and discard buffered media data according to the CLBU instruction.

In this embodiment, the first receiving module of the MG receives a Speaker Verification instruction sent from the MGC; the verifying module performs a speaker verification operation according to the Speaker Verification instruction; and the reporting module reports a result of the speaker verification operation to the MGC. In this way, the speaker recognition may be implemented over an MGCP in a separate architecture, which facilitates the sharing, maintenance, and update of various voiceprint file resources.

FIG 8 is a schematic structure diagram of an embodiment of an MGC according to the present invention. As shown in FIG 8, the MGC includes a first sending module 81 and a second receiving module 82. The first sending module 81 is configured to send a Speaker Verification instruction to an MG The second receiving module 82 is configured to receive a result of a speaker verification operation that is obtained according to the Speaker Verification instruction and reported by the MG

Specifically, when the speaker recognition is implemented over an MGCP, for example, H.248, the first sending module 81 of the MGC sends a Speaker Verification instruction to the MG; the MG executes the speaker verification operation according to the Speaker Verification instruction, and obtains the result of the speaker verification operation; and the second receiving module 82 receives the result of the speaker verification operation reported by the MG

In addition, the MGC may include a second session establishing module configured to send an instruction for establishing a speaker verification session to the MG, where the instruction for establishing the speaker verification session carries a VOID used for the speaker verification operation. The MGC may further include a second session terminating module configured to send an instruction for terminating the speaker verification session to the MG, and receive a termination reply message returned from the MG The specific method for instructing the MG to establish or terminate a voiceprint session connection to implement speaker recognition by the second session establishing module and the second session terminating module is described in the second embodiment and third embodiment of the method for speaker recognition.

In addition, when the MGC needs to instruct the MG to perform a speaker verification operation on the speech information in the buffer of the MG, the MGC may include a second buffer verifying module configured to send a VEBU instruction to the MG, instructing the MG to perform, according to the VEBU instruction, a speaker verification operation on the speech information stored in the buffer of the MG

When the MGC needs to instruct the MG to obtain the intermediate result of the speaker verification operation, the MGC may include a second intermediate result module configured to send a GIR instruction to the MG, instructing the MG to obtain, according to the GIR instruction, the intermediate result of the speaker verification operation that is executed currently and report the intermediate result.

When the MGC needs to instruct the MG to stop the speaker verification operation, the MGC may include a second verification stopping module configured to send an STVE instruction to the MG, instructing the MG to stop, according to the STVE instruction, the speaker verification operation that is executed currently.

When the MGC needs to instruct the MG to query a voiceprint file, the MGC may further include a second query instructing module configured to send a Query Voiceprint instruction to the MG, where the Query Voiceprint instruction carries a VOID that needs to be queried, and receive a query result that is obtained according to the VOID and returned by the MG The specific method for instructing the MG to query a voiceprint by the second query instructing module is described in the second embodiment, third embodiment, and fourth embodiment of the method for speaker recognition.

When the MGC needs to instruct the MG to delete a voiceprint file, the MGC may further include a second deletion instructing module configured to send a Delete Voiceprint instruction to the MG, where the Delete Voiceprint instruction carries a VOID that needs to be deleted, and receive a deletion result that is obtained according to the VOID and returned by the MG The specific method for instructing the MG to delete a voiceprint by the second deletion instructing module is described in the second embodiment, third embodiment, and fifth embodiment of the method for speaker recognition.

When the MGC needs to instruct the MG to perform VERO, the MGC may further include a second VERO module configured to send a Verify Rollback instruction to the MG, instructing the MG to discard, according to the Verify Rollback instruction, latest speech information collected by the MG

When the MGC needs to instruct the MG to clear the buffer, the MGC may further include a second buffer clearing module configured to send a CLBU instruction to the MG, instructing the MG to discard buffered media data according to the CLBU instruction.

In this embodiment, the first sending module of the MGC sends a Speaker Verification instruction to the MG, instructing the MG to perform a speaker verification operation on speech information and obtain a result of the speaker verification operation; and the second receiving module receives the result of the speaker verification operation reported by the MG In this way, the speaker recognition may be implemented over an MGCP in a separate architecture, which facilitates the sharing, maintenance, and update of various voiceprint file resources.

FIG 9 is a schematic structure diagram of an embodiment of a system for speaker recognition according to the present invention. As shown in FIG 9, the system for speaker recognition includes an MG 91 and an MGC 92. The MG 91 is configured to: receive a Speaker Verification instruction sent from the MGC; execute a speaker verification operation according to the Speaker Verification instruction, and obtain a result of the speaker verification operation; and report the result of the speaker verification operation to the MGC. The MGC 92 is configured to: send the Speaker Verification instruction to the MG; and receive the result of the speaker verification operation that is obtained according to the Speaker Verification instruction and reported by the MG

Specifically, when the speaker recognition is implemented over an MGCP, for example, H.248, the MG 91 receives a Speaker Verification instruction sent from the MGC 92, and performs a speaker verification operation on the speech information according to the Speaker Verification instruction. If the Speaker Verification instruction sent from the MGC 92 includes a storage address storing a segment of specified speech information, the MG 91 may obtain speech information that needs to be recognized from this storage address. If the Speaker Verification instruction is an instruction for receiving real-time speech information of the speaker, the MG 91 may receive the real-time speech information of the speaker. Then, the MG 91 may match the voiceprint of the obtained speech information with the stored voiceprint file, execute the speaker verification operation, and report the result of the speaker verification operation to the MGC 92. The MG 91 may report the result of the speaker verification operation to the MGC 92 through a Notify request message, where the result of the speaker verification operation may include information about whether the matching succeeds, the degree of similarity in the matching, and speaker related information. The reporting process may be implemented through an event.

In this embodiment, the MG 91 and the MGC 92 may be any one of the MGs and MGCs in the preceding embodiments of the MG and the MGC. The specific method for performing speaker recognition by the MG and the MGC is described in the first embodiment, the second embodiment, and the third embodiment of the method for speaker recognition.

In this embodiment, the MG executes a speaker verification operation on the speech information according to the Speaker Verification instruction sent from the MGC and the voiceprint file stored in the MG, and then reports the execution result of the speaker verification operation to the MGC. In this way, the speaker recognition is implemented over an MGCP in a separate architecture, which facilitates the sharing, maintenance, and update of various voiceprint file resources.

Finally, it should be noted that the above embodiments are used only to describe the technical solutions of the present invention instead of limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, without departing from the spirit and scope of the technical solutions of the embodiments of the present invention.

## Claims

1. A method for speaker recognition, comprising:
receiving a Speaker Verification instruction sent from a Media Gateway Controller, MGC;
executing a speaker verification operation according to the Speaker Verification instruction, and obtaining a result of the speaker verification operation; and
reporting the result of the speaker verification operation to the MGC.

2. The method for speaker recognition according to claim 1, wherein before receiving the Speaker Verification instruction sent from the MGC, the method comprises:
receiving from the MGC an instruction for establishing a speaker verification session, wherein the instruction for establishing the speaker verification session carries a Voiceprint Identifier, VOID, used for the speaker verification operation; and
establishing a speaker recognition session according to the instruction for establishing the speaker verification session, and obtaining a voiceprint file corresponding to the VOID.

3. The method for speaker recognition according to claim 2, wherein after reporting the result of the speaker verification operation to the MGC, the method comprises:
receiving from the MGC an instruction for terminating the speaker verification session; and
terminating the speaker verification session according to the instruction for terminating the speaker verification session, and returning a termination reply message to the MGC.

4. The method for speaker recognition according to any one of claims 1 to 3, further comprising:
receiving a Verify from Buffer, VEBU, instruction sent from the MGC, and performing a speaker verification operation on speech information stored in a buffer of a Media Gateway, MG, according to the VEBU instruction; or
receiving a Get Intermediate Result, GIR, instruction sent from the MGC, and according to the GIR instruction, obtaining an intermediate result of the speaker verification operation that is executed currently and reporting the intermediate result; or
receiving a Stop Verify, STVE, instruction sent from the MGC, and according to the STVE instruction, stopping the speaker verification operation that is executed currently; or
receiving a Query Voiceprint instruction sent from the MGC, wherein the Query Voiceprint instruction carries a VOID that needs to be queried, and returning a query result obtained according to the VOID to the MGC; or
receiving a Delete Voiceprint instruction sent from the MGC, wherein the Delete Voiceprint instruction carries a VOID that needs to be deleted, and returning a deletion result to the MGC; or
receiving a Verify Rollback, VERO, instruction sent from the MGC, and according to the Verify Rollback instruction, discarding latest speech information collected by the MG; or
receiving a Clear Buffer, CLBU, instruction sent from the MGC, and discarding buffered media data according to the CLBU instruction.

5. A method for speaker recognition, comprising:
sending a Speaker Verification instruction to a Media Gateway, MG, and
receiving a result of a speaker verification operation that is obtained according to the Speaker Verification instruction and reported by the MG

6. The method for speaker recognition according to claim 5, wherein before sending the Speaker Verification instruction to the MG, the method comprises:
sending an instruction for establishing a speaker verification session to the MG, wherein the instruction for establishing the speaker verification session carries a Voiceprint Identifier, VOID, used for the speaker verification operation.

7. The method for speaker recognition according to claim 6, wherein after receiving the result of the speaker verification operation that is obtained according to the Speaker Verification instruction and reported by the MG, the method comprises:
sending an instruction for terminating the speaker verification session to the MG, and receiving a termination reply message returned from the MG.

8. The method for speaker recognition according to any one of claims 5 to 7, further comprising:
sending a Verify from Buffer, VEBU, instruction to the MG, instructing the MG to perform, according to the VEBU instruction, a speaker verification operation on speech information stored in a buffer of the MG; or
sending a Get Intermediate Result, GIR, instruction to the MG, instructing the MG to obtain, according to the GIR instruction, an intermediate result of the speaker verification operation that is executed currently and report the intermediate result; or
sending a Stop Verify, STVE, instruction to the MG, instructing the MG to stop, according to the STVE instruction, the speaker verification operation that is executed currently; or
sending a Query Voiceprint instruction to the MG, wherein the Query Voiceprint instruction carries a VOID that needs to be queried, and receiving a query result that is obtained according to the VOID and returned by the MG; or
sending a Delete Voiceprint instruction to the MG, wherein the Delete Voiceprint instruction carries a VOID that needs to be deleted, and receiving a deletion result that is obtained according to the VOID and returned by the MG; or
sending a Verify Rollback, VERO, instruction to the MG, instructing the MG to discard, according to the Verify Rollback instruction, latest speech information collected by the MG; or
sending a Clear Buffer, CLBU, instruction to the MG, instructing the MG to discard buffered media data according to the CLBU instruction.

9. A Media Gateway, MG, comprising:
a first receiving module, configured to receive a Speaker Verification instruction sent from a Media Gateway Controller, MGC;
a verifying module, configured to execute a speaker verification operation according to the Speaker Verification instruction, and obtain a result of the speaker verification operation; and
a reporting module, configured to report the result of the speaker verification operation to the MGC.

10. The MG according to claim 9, further comprising any one or multiple of the following modules:
a first session establishing module, configured to receive from the MGC an instruction for establishing a speaker verification session, wherein the instruction for establishing the speaker verification session carries a Voiceprint Identifier, VOID, used for the speaker verification operation;
an invoking module, configured to establish a speaker recognition session according to the instruction for establishing the speaker verification session, and obtain a voiceprint file corresponding to the VOID;
a first session terminating module, configured to receive from the MGC an instruction for terminating the speaker verification session;
a terminating and replying module, configured to terminate the speaker verification session according to the instruction for terminating the speaker verification session, and return a termination reply message to the MGC;
a first buffer verifying module, configured to receive a Verify from Buffer, VEBU, instruction sent from the MGC, and according to the VEBU instruction, perform a speaker verification operation on speech information stored in a buffer of the MG;
a first intermediate result module, configured to receive a Get Intermediate Result, GIR, instruction sent from the MGC, and according to the GIR instruction, obtain an intermediate result of the speaker verification operation that is executed currently and report the intermediate result;
a first verification stopping module, configured to receive a Stop Verify, STVE, instruction sent from the MGC, and according to the STVE instruction, stop the speaker verification operation that is executed currently;
a first querying module, configured to receive a Query Voiceprint instruction sent from the MGC, wherein the Query Voiceprint instruction carries a VOID that needs to be queried, and return a query result obtained according to the VOID to the MGC;
a first deleting module, configured to receive a Delete Voiceprint instruction sent from the MGC, wherein the Delete Voiceprint instruction carries a VOID that need to be deleted, and return a deletion result to the MGC;
a first verification rollback module, configured to receive a Verify Rollback, VERO, instruction sent from the MGC, and according to the Verify Rollback instruction, discard latest speech information collected by the MG; and
a first buffer clearing module, configured to receive a Clear Buffer, CLBU, instruction sent from the MGC, and discard buffered media data according to the CLBU instruction.

11. A Media Gateway Controller, MGC, comprising:
a first sending module, configured to send a Speaker Verification instruction to a Media Gateway, MG; and
a second receiving module, configured to receive a result of a speaker verification operation that is obtained according to the Speaker Verification instruction and reported by the MG

12. The MGC according to claim 11, further comprising any one or multiple of the following modules:
a second session establishing module, configured to send an instruction for establishing a speaker verification session to the MG, wherein the instruction for establishing the speaker verification session carries a Voiceprint Identifier, VOID, used for the speaker verification operation;
a second session terminating module, configured to send an instruction for terminating the speaker verification session to the MG, and receive a termination reply message returned from the MG;
a second buffer verifying module, configured to send a Verify from Buffer, VEBU, instruction to the MG, instructing the MG to perform, according to the VEBU instruction, a speaker verification operation on speech information stored in a buffer of the MG;
a second intermediate result module, configured to send a Get Intermediate Result, GIR, instruction to the MG, instructing the MG to obtain, according to the GIR instruction, an intermediate result of the speaker verification operation that is executed currently and report the intermediate result;
a second verification stopping module, configured to send a Stop Verify, STVE, instruction to the MG, instructing the MG to stop, according to the STVE instruction, the speaker verification operation that is executed currently;
a second querying module, configured to send a Query Voiceprint instruction to the MG, wherein the Query Voiceprint instruction carries a VOID that needs to be queried, and receive a query result that is obtained according to the VOID and returned by the MG;
a second deleting module, configured to send a Delete Voiceprint instruction to the MG, wherein the Delete Voiceprint instruction carries a VOID that needs to be deleted, and receive a deletion result that is obtained according to the VOID and returned by the MG;
a second verification rollback module, configured to send a Verify Rollback, VERO, instruction to the MG, instructing the MG to discard, according to the Verify Rollback instruction, latest speech information collected by the MG; and
a second buffer clearing module, configured to send a Clear Buffer, CLBU, instruction to the MG, instructing the MG to discard buffered media data according to the CLBU instruction.

13. A system for speaker recognition, comprising:
a Media Gateway, MG, configured to: receive a Speaker Verification instruction sent from a Media Gateway Controller, MGC; execute a speaker verification operation according to the Speaker Verification instruction, and obtain a result of the speaker verification operation; and report the result of the speaker verification operation to the MGC; and
the MGC, configured to: send the Speaker Verification instruction to the MG; and receive the result of the speaker verification operation that is obtained according to the Speaker Verification instruction and reported by the MG
